# EUROPEAN PATENT APPLICATION

(11) **EP 2 862 717 A1**
(43) Date of publication of application: **22.04.2015**
(21) Application number: 14189136.6
(22) Date of filing: 16.10.2014
(51) Int. Cl.: B41F 33/00, B41F 33/02, B41F 27/12, B41F 27/14

(54) **Module, process and apparatus for the dimensional analysis of a plate-holding cylinder**

(30) Priority: 16.10.2013 IT BO20130568
(71) Applicant: Bieffebi Srl, 40057 Granarolo Dell'Emilia (Bologna) (IT)
(72) Inventor: Sambri, Stefano, 40057 Granarolo Dell'Emilia (Bologna) (IT)
(74) Representative: Fuochi, Riccardo

(57) **Abstract**

A module for the dimensional analysis of a plate-holding cylinder, comprising a plurality of boxes (2,3), in table form, each of which corresponds to a surface portion (110) of the outer surface (105) of the plate-holding cylinder (104) and is indicative of the dimensional deviation of said surface portion (110) with respect to the nominal diameter of the plate-holding cylinder (104).

A process and an apparatus (100) for dimensional analysis of the plate-holding cylinder (104) are also proposed.

## Description

### TECHNICAL FIELD OF THE INVENTION

The present invention concerns a module, a process and an apparatus for the dimensional analysis of a plate-holding cylinder.

More specifically, the invention concerns a module, a process and an apparatus for analysis suitable for characterising the surface conditions of a plate-holding cylinder in relation to the deviation with respect to its nominal diameter, in various portions of its outer surface.

### STATE OF THE ART

It is known that flexographic printing plates are mounted on respective plate-holding sleeves using special mounting machines.

In particular, the flexographic plate is mounted on the respective sleeve through a double-sided tape arranged between the smooth surface of the sleeve itself and the plate.

Normally, in practice evaluations are carried out suitable for establishing whether the cylinder-double-sided tape-plate assembly does or does not have acceptable dimensional errors, i.e. within the set tolerances to ensure printing of the desired quality. Moreover, such evaluations must help the operator to determine what printing pressure to adopt in relation, indeed, to the dimensional errors of the aforementioned assembly in its different areas.

In practice, it has been found that the greatest errors of the aforementioned cylinder-double-sided tape-plate assembly with respect to its ideal configuration, i.e. perfectly cylindrical, are mainly found in the plate-holding sleeve, and to a lesser extent in the double-sided tape.

The plate, on the other hand, normally has a very regular and precise thickness, which thus contributes to a lesser extent to producing such dimensional errors.

The double-sided tape generally consists of a polymeric foam - generally polyethylene and polymers with similar chemical, physical and mechanical properties - provided with thin layers of gluing material on both flat surfaces.

Since it is a compressible element under a certain load, i.e. in the normal printing pressure conditions, it has been found that the influence of possible dimensional errors that may be present in it has little impact on the overall errors of the cylinder-double-sided tape-plate assembly, since they are to some extent compensated by the printing pressure.

On the other hand, as far as the sleeves are concerned, it has been observed that those currently available on the market, made from various materials and consequently having different characteristics in relation to the specific applications for which they are intended, are normally designed to keep their dimensional characteristics over time within a certain permissible tolerance, so as to be able to be used extensively for a set minimum time period.

However, their practical use in printing work, and therefore their continuous exposure to high temperatures and to high levels of humidity, results in dimensional errors often of a size greater than the permissible tolerances, which actually makes them unusable for certain jobs even before the expiration of the time period within which their characteristics should actually be guaranteed.

At the same time, the workers in the field have highlighted the need to be able to best exploit, and in the most cost-effective manner, the range of sleeves available, even with a certain number of sleeves having dimensional errors outside of the permissible tolerance.

### PURPOSES OF THE INVENTION

The technical task of the present invention is therefore to improve the state of the art.

In such a technical task, a purpose of the present invention is to devise a module for the dimensional analysis of a plate-holding cylinder that allows optimal exploitation of the cylinder itself in one or more given printing jobs.

Yet another purpose of the present invention is to provide a module for the dimensional analysis of a plate-holding cylinder that makes it possible to quickly and simply know the dimensional conditions of a given plate-holding cylinder in relation to its use in given printing jobs.

Such a task and such purposes are all accomplished by the module for the dimensional analysis of a plate-holding cylinder according to the attached claim 1.

The module according to the invention comprises a plurality of boxes, in table form, each of which corresponds to a surface portion of the outer surface of the plate-holding cylinder and is indicative of the dimensional deviation of such a surface portion with respect to the nominal diameter of the plate-holding cylinder itself.

Such a task and such purposes are also accomplished by the process and by the apparatus for the dimensional analysis of a plate-holding cylinder, respectively, according to the attached claims 8 and 10.

The dependent claims refer to advantageous embodiments of the invention.

### BRIEF DESCRIPTION OF THE DRAWINGS.

These and further advantages will become clearer to any man skilled in the art from the following description and from the attached drawings, given as a non-limiting example, in which:
figure 1 is a schematic view of a module according to the invention;
figure 2 is a schematic perspective view of a plate-holding cylinder with which the module according to the invention is associated;
figure 3 is a schematic front view of an apparatus for the dimensional analysis according to the present invention;
figure 4 is a schematic perspective view of a plate-holding cylinder mounted on the apparatus according to the invention;
figure 5 is a schematic view of a module shown on the display of the apparatus;
figure 6 is another schematic view of a module shown on the display of the apparatus according to the invention.

### EMBODIMENTS OF THE INVENTION.

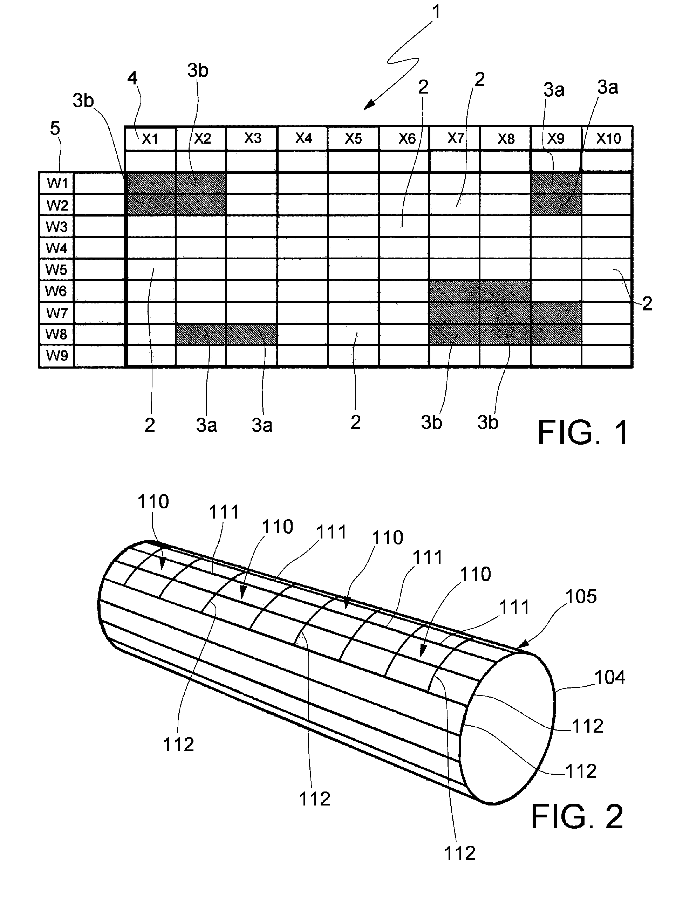

With reference to figure 1, reference numeral 1 wholly indicates, for illustrating and not limiting purposes, a module for the dimensional analysis of a plate-holding cylinder according to the present invention. Figure 2, on the other hand, illustrates a plate-holding cylinder 104 with which the module 1 according to the invention is associated.

With reference to figure 2, it can be seen that the plate-holding cylinder 104 normally consists of a rigid sleeve, for example made from metal, or fibreglass, or another suitable material, having a smooth outer surface 105, on which the flexographic plate is indeed fixed through a double-sided tape or other similar fastening means.

The double-sided tape is normally available in the form of a cylindrical reel, of any dimensions in relation to the specific application requirements.

The double-sided tape, of the type *per sé* known in this type of application, has the inner surface ready to be wound on the cylinder 104, whereas the outer surface is protected by a liner that offers low adhesiveness, and therefore is easy to remove for the subsequent attachment of the plate.

The outer surface 105 of the plate-holding cylinder 104 can ideally be divided into a plurality of surface portions 110.

This division is only ideal in the sense that it does not correspond to any division physically carried out with a marking or similar on the outer surface 105 of the cylinder 104.

This does not rule out the possibility that in some embodiments of the invention, such a division can be carried out through an actual marking of the outer surface 105 of the plate-holding cylinder 104, if it is considered that this can be advantageous.

In greater detail, the overall length of the plate-holding cylinder 104 is ideally divided into a plurality of axial portions 111.

The axial portions 111 have respective predetermined lengths, which can be equal to each other or even different, in relation to the specific application requirements.

Moreover, the circumference of the plate-holding cylinder 104 is ideally divided into a plurality of circumferential portions 112.

The circumferential portions 112 have respective predetermined lengths - or angular widths - that can be equal to one another or different in relation to different requirements.

The crossing of such divisions of the length and of the circumference of the plate-holding cylinder 104 ideally produces, on its outer surface 105, a sort of network comprising a plurality of surface portions 110 that, considered in the development in plan of the aforementioned outer surface 105, are rectangular or substantially rectangular.

The length of the aforementioned axial and circumferential portions 111 and 112, selected on each occasion in the specific application, determines the total number of surface portions 110 into which the outer surface 105 of the plate-holding cylinder 104 is ideally divided, and therefore the area of the single surface portions 110 themselves.

For example, in a preferred embodiment of the invention, the axial and circumferential portions 111 and 112 both have a length of a few millimetres, for example 6 mm.

The module 1 according to the invention comprises, as illustrated in figure 1, a plurality of boxes 2,3a,3b. The boxes 2,3a,3b are organised in table form, or another similar form.

The boxes 2,3a,3b of the module 1 correspond, in greater detail, respectively, to the aforementioned surface portions 110 of the plate-holding cylinder 104. The module 1 also comprises an upper line 4 where the various axial portions 111 into which the overall length of the plate-holding cylinder 104 is ideally divided are indicated.

For example, the various axial portions 111, of which in this case there are ten, are conventionally indicated with the symbols "X1-X10".

The module 1 also comprises a lateral column 5 where the various circumferential portions 112 into which the circumference of the plate-holding cylinder 104 is ideally divided are indicated.

For example, the various circumferential portions 112, of which in this case there are nine, for example, are conventionally indicated with the symbols "W1-W9".

The symbols "X1-X10" and "W1-W9" thus constitute a sort of system of cylindrical coordinates that allow the various boxes 2,3a,3b to be identified.

Each of the boxes 2,3a,3b can thus be identified, inside the module 1, by a system of coordinates consisting, indeed, of the aforementioned axial and circumferential portions 111 and 112.

The module 1 thus in practice represents the development in plan - for example rectangular - of the outer surface 105 of the plate-holding cylinder 104, with the ideal division into surface portions 110, respectively represented by the boxes 2,3a,3b.

According to the invention, each box 2,3a,3b is indicative of the average deviation of the diameter measurements carried out inside the corresponding surface portion 110 with respect to the nominal diameter of the cylinder 104.

The solution of associating each box 2,3a,3b with the average dimensional deviation detected in the points belonging to the corresponding surface portion 110 of the outer surface 105 of the plate-holding cylinder 104 advantageously makes it possible to define, in a simple, practical, intuitive and cost-effective manner, the dimensional conditions of that given surface portion 110 in terms of deviation with respect to the nominal diameter of the cylinder 104 itself.

The average deviation associated with each of the boxes 2,3a,3b of the module 1 is preferably indicated in numerical form.

In some embodiments, however, the aforementioned average deviation can be indicated in another form, different from numerically.

For example, in some embodiments of the invention the deviation can be advantageously indicated in chromatic form, preferably using different colours in relation to the different dimensional conditions.

In yet other embodiments, the aforementioned average deviation can be indicated through a numerical and chromatic combination, as made clearer hereafter, or in other forms.

Chromatic indication, possibly combined with numerical indication, is particularly advantageous since it makes it possible to immediately identify, at first glance, the boxes 2,3a,3b associated with surface portions 110 having certain dimensional conditions.

Preferably, the aforementioned average deviation indicated by each box 2,3a,3b of the module 1 is identified differently in relation to whether or not it fall within certain predetermined dimensional tolerances with reference to the nominal diameter of the cylinder 104.

The nominal diameter of the cylinder 104, i.e. that indicated by the manufacturer, constitutes an essential piece of data for setting all of the printing parameters once the flexographic plate is mounted on it.

For example, it is possible to establish that a deviation in the diameter with respect to the nominal diameter of the plate-holding cylinder 104 is permissible, for the purposes of correct performance of printing jobs, if they fall within the dimensional tolerance ±0,05 mm.

Therefore, for example in the case in which the deviations of the various boxes 2,3a,3b are associated with different colours as defined earlier, it is possible to select a certain colour to indicate the boxes 2 having deviations within the set dimensional tolerance, and other colours to indicate the boxes 3a,3b, on the other hand, having deviations not within the aforementioned set dimensional tolerance, whether negative or positive.

For example, reference numeral 3a indicates the boxes having negative deviations not within the dimensional tolerance, i.e. greater than or equal to, in absolute value, -0,05 mm.

Reference numeral 3b, on the other hand, indicates the boxes having positive deviations not within the dimensional tolerance, i.e. greater than or equal to +0,05 mm.

The module 1 according to the present invention can comprise a paper element on which the boxes 2,3a,3b are shown in table form.

With reference to figure 1, the module 1 thus preferably comprises a plurality of rows and columns corresponding to the aforementioned axial and circumferential portions 111 and 112 of the outer surface 105 of the plate-holding cylinder 104, which by crossing over one another indeed create the boxes 2,3a,3b.

For example, such a paper element can consist of a sheet of paper, card or similar.

The use of a paper element can be advantageous in the case in which the module 1 must be physically associated with the given plate-holding cylinder 104 to which it refers.

In this way, the operator can immediately see the dimensional conditions of a given plate-holding cylinder 104 when it is, for example, in storage, so as to be able to quickly select the cylinder 104 most suitable for the specific application.

The module 1 can also comprise a file of the type that can be read by an electronic processor, or similar, showing the aforementioned boxes 2,3a,3b, again in table form or in another form.

In another possible embodiment, the module 1 can comprise an element able to be directly applied onto the outer surface 105 of the plate-holding cylinder 104.

For example, in such an embodiment the module 1 can comprise a removable adhesive element to be applied onto the outer surface 105 of the plate-holding cylinder 104.

The adhesive element can, in real scale, represent the surface portions 110 into which the outer surface 105 of the plate-holding cylinder 104 is divided, to provide the operator with an intuitive visual indication of the dimensional conditions of the cylinder 104 itself.

More generally, the module 1 can comprise any support, of any size, shape or material, suitable for making indications on the dimensional conditions of the plate-holding cylinder 104 in the various surface portions 110 of the outer surface 105 immediately visible and available to the operator.

Also object of the present invention is an apparatus 100 for the dimensional analysis of a plate-holding cylinder 104.

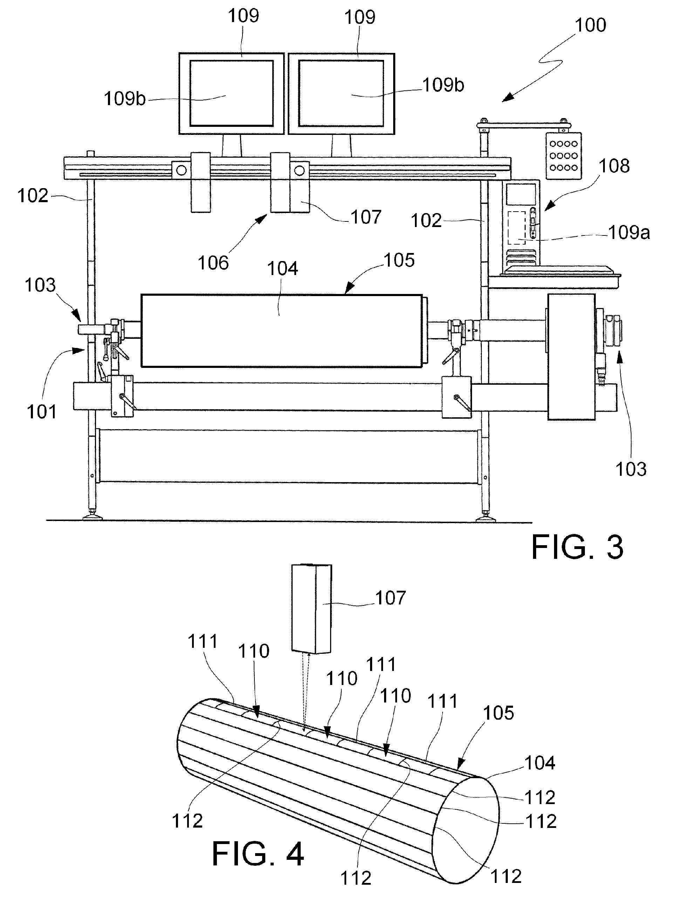

The apparatus 100 according to the invention is illustrated in figure 3.

The apparatus 100 comprises a base block, wholly indicated with 101.

The base block 101 comprises, in particular, two vertical shoulders 102.

The shoulders 102 have rotary support means, wholly indicated with 103, for a plate-holding cylinder 104 fixed to them.

The apparatus 100 comprises a group for detecting geometric parameters of the various components used in the printing, wholly indicated with 106.

More specifically, the group 106 is suitable for detecting the geometric parameters of the cylinder 104. Alternatively, in certain situations the group 106 could also be used for detecting the geometric parameters of the double-sided tape or of the plate, in relation to the specific application requirements and without particular limitations.

The group 106 comprises sensor means 107, aligned with at least one portion of the element to be analysed.

The sensor means 107 comprise, in greater detail, a laser emitter and a receiver of reflected signals, or similar.

Such a solution makes it possible to acquire with extreme precision, in particular, the distance between the emission plate of the laser emitter and the surface facing it: in this way a measurement is taken, with a given resolution, of the geometric errors of such a surface with respect to the nominal values.

The sensor means 107 could however also be of another equivalent type.

The group 106 also comprises an electronic processor 108.

The electronic processor 108 is provided with at least one respective memory element for storing the geometric parameters detected by the sensor means 107.

The group 106 comprises an acquisition card of the information detected by the sensor means 107.

The electronic processor 108 can also comprise an adjustable filter, slaved to the acquisition card of the signals received by the sensor means 107, for adjusting the resolution of the sensor means 107 themselves.

For example, in the case in which the sensor means 107 are used to detect the geometric parameters of the double-sided tape, the aforementioned adjustment of the resolution becomes absolutely necessary to exclude the surface irregularities of the double-sided tape itself due to the nature of the material from which it is made.

The apparatus 100 also comprises a display 109.

The display 109 is slaved to the electronic processor 108, and is intended to be used by the operator, as made clearer hereafter.

Alternatively, or in addition to the display 109, the apparatus 100 can comprise an interface apparatus such as a printer, a screen, a display or similar, for use by the operator.

The apparatus 100 also comprises means 109a for generating a module 1 according to the invention described earlier, associated with the cylinder 104 analysed by the apparatus 100 itself.

The generating means 109a are operatively slaved to the electronic processor 108.

In an embodiment of the invention of particular practical interest, the module 1 produced by the generating means 109a can be displayed on the display 109 of the apparatus 100 according to the invention.

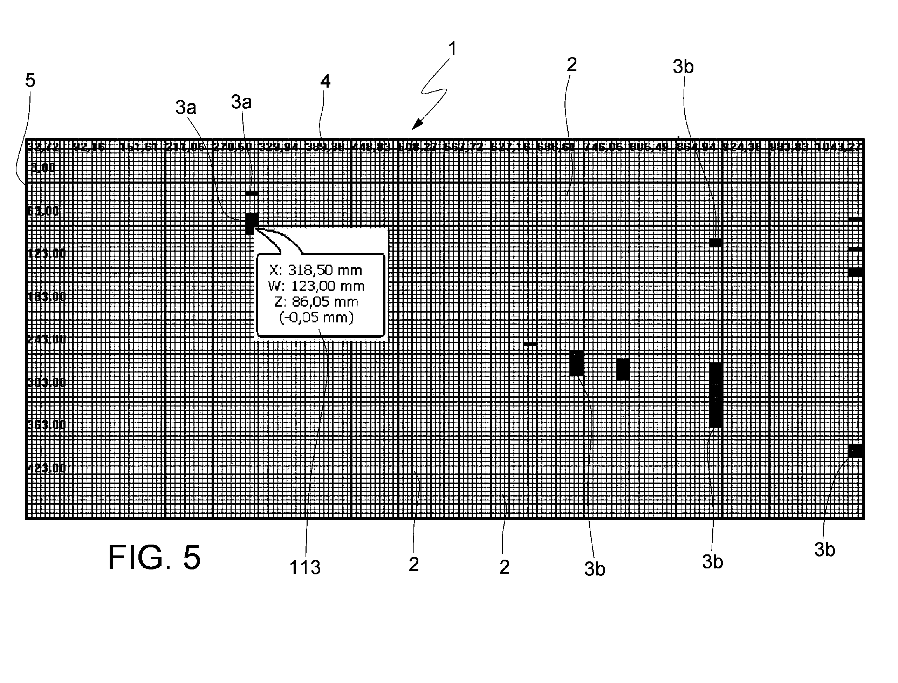

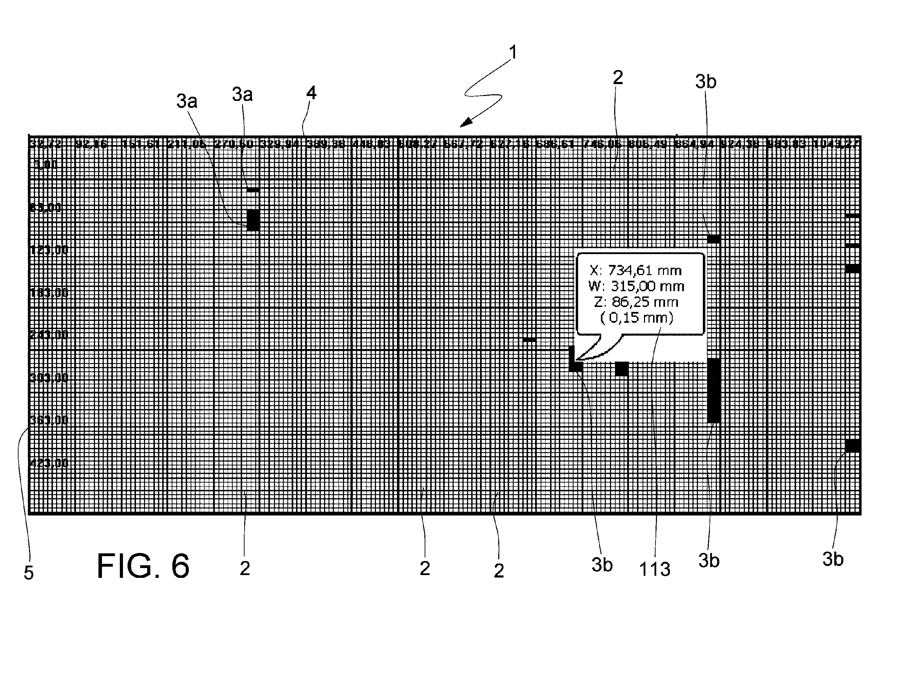

The image of the module 1 on the display 109 is represented in figures 5,6.

As stated, in the module 1 there are boxes 2 with deviations within the set dimensional tolerance, and boxes 3a,3b with deviations not within the aforementioned predetermined dimensional tolerance, negative and positive respectively.

According to an aspect of the present invention, the display 109 comprises means 109b for selecting a given box 2,3a,3b by the user, suitable for displaying information on the dimensional conditions of the surface portion 110 of the cylinder 104 corresponding to such a box 2,3a,3b.

For example, the selection means 109b comprise a touchscreen display 109, configured to display, for each box 2,3a,3b - or groups of contiguous boxes, if they are small in size - the dimensional conditions of the cylinder 104 under analysis in the surface portion 110 corresponding to such a box 2,3a,3b.

In particular, the displaying of the dimensional conditions takes place for example through a window 113 that appears on the screen of the display 109 following pressure exerted by the user on the touchscreen 109b at the box 2,3a,3b of interest.

Alternatively, the selection means 109b can comprise a pointer device such as a mouse or similar.

Figure 5 shows the display 109 of the apparatus 100 in which a window 113 is displayed following the pressure of the user exerted on the touch screen 109b at one of the boxes 3a, which the user has been able to immediately identify, for example, thanks to their different colour from that of the boxes 2.

As can be seen, the window 113 concisely and intuitively displays the cylindrical coordinates of the axial and circumferential portions 111 and 112 that correspond to the box 3a selected, respectively indicated with "X" and "W", and the radius of the cylinder 104 at such a box 3a, indicated with "Z". Moreover, the average deviation of the diameter of the cylinder 104 inside such a box 3a is displayed, which in this case is -0,05 mm, and therefore it concerns a negative deviation with respect to the nominal diameter of the cylinder 104.

Figure 6, on the other hand, shows the display 109 of the apparatus 100 in which a window 113 is displayed following pressure of the user exerted on the touch screen 109b at one of the boxes 3b.

As can be seen, also in this case the window 113 displays the cylindrical coordinates of the axial and circumferential portions 111 and 112 that correspond to the selected box 3b, respectively indicated with "X" and "W", and the radius of the cylinder 104 at such a box 3b, indicated with "Z".

Moreover the average deviation of the diameter of the cylinder 104 inside such a box 3b is displayed, which in this case is +0,15 mm, and therefore it concerns a positive deviation with respect to the nominal diameter of the cylinder 104.

Of course, the window 113 can also display other technical information considered useful for the activities of the workers.

Hereafter, we will describe in detail a process for the dimensional analysis of a plate-holding cylinder 104 according to the present invention.

It should be specified that such a process can be carried out preferably with an apparatus 100 according to the invention like the one described above, or even with an apparatus of another functionally and/or structurally similar type; however, more generally, the process could also be carried out in the absence of such an apparatus.

Therefore, hypothesising that, in a preferred embodiment thereof, the process is carried out with the apparatus 100 according to the invention described earlier, the process foresees an initial step of dividing the outer surface 105 of the plate-holding cylinder 104 into a plurality of surface portions 110, as described earlier.

This division step is preferably carried out only ideally, i.e. it does not correspond to any division carried out physically with a marking or similar on the outer surface 105 of the cylinder 104.

This does not rule out the possibility that in some embodiments of the invention, such a division can be carried out through an actual marking of the outer surface 105 of the plate-holding cylinder 104, if it is considered that this can be advantageous.

In greater detail, the total length of the plate-holding cylinder 104 is ideally divided into a plurality of axial portions 111.

The axial portions 111 have respective predetermined lengths, which can be equal to each other or even different, in relation to the specific application requirements.

Moreover, the circumference of the plate-holding cylinder 104 is ideally divided into a plurality of circumferential portions 112.

The circumferential portions 112 have respective predetermined lengths - or angular widths - that can be equal to each other or different in relation to different requirements.

The crossing of such divisions of the length and of the circumference of the plate-holding cylinder 104 ideally produces, on its outer surface 105, a sort of network comprising a plurality of surface portions 110 that, considered in the development in plan of the aforementioned outer surface 105, are rectangular or substantially rectangular.

The length of the aforementioned axial and circumferential portions 111 and 112, selected on each occasion in the specific application, determines the total number of surface portions 110 into which the outer surface 105 of the plate-holding cylinder 104 is ideally divided, and therefore the area of the single surface portions 110 themselves.

For example, in a preferred embodiment of the process according to the invention, the axial and circumferential portions 111 and 112 both have a length of a few millimetres, for example 6 mm.

The process also foresees, for each of the surface portions 110, a step of measuring the diameter of the plate-holding cylinder 104 in a plurality of points belonging to the surface portion 110 itself.

Such a step of measuring the diameter of the plate-holding cylinder 104 in a plurality of points is preferably, but not exclusively, carried out through the apparatus 100 described earlier.

Figure 4 schematically represents, together with the plate-holding cylinder 104, also the sensor means 107, of the type described, in a step of measuring the diameter in a certain number of points belonging to a given surface portion 110 of the outer surface 105 of the cylinder 104 itself.

In other embodiments of the invention, this measuring step could be carried out through other known apparatuses suitable for this type of application, and that will not be described here in detail.

The plate-holding cylinder 104 normally has a nominal diameter, i.e. that indicated by the manufacturer, which as stated constitutes an essential piece of data for setting all of the printing parameters once the flexographic plate has been mounted on it.

The process according to the invention then foresees, for each of the aforementioned surface portions 110, a step of determining the deviation of the diameter of the plate-holding cylinder 104 in the detection points with respect to the nominal diameter of the cylinder 104 itself.

In greater detail, this step consists of determining the average deviation of the different diameter measurements with respect to the nominal diameter of the plate-holding cylinder 104.

In other words, each of the surface portions 110 into which the outer surface 105 of the plate-holding cylinder 104 is divided is associated with an average deviation value with respect to the nominal diameter of the cylinder 104 itself.

The process according to the invention also comprises a step of generating a module 1 for the dimensional analysis of the plate-holding cylinder 104.

The module 1 generated through the process according to the invention, is of the type described earlier, or of another equivalent type.

For example, as stated the module 1 can consist of a saveable and printable graphical file, or similar.

One of the advantageous uses of the module 1, or of the apparatus 100 or of the process according to the present invention is the possibility of carrying out comparisons, also visually, quickly and intuitively, between the dimensional conditions of the plate-holding cylinder 104 shown by the module 1 itself and the flexographic plates that the operator must mount for a given printing job.

In greater detail, the operator can be in a position of having to decide which flexographic plate to mount on a given plate-holding cylinder 104 so as to obtain a printing result that is optimal, or at least without unacceptable defects.

By having the module 1, the operator can quickly know, at least at first glance and in any case with sufficient precision, whether the surface portions 110 of the cylinder 104 involved, possibly having dimensional deviations not within the predetermined tolerances, do or do no overlap the printing areas of the flexographic plate.

Indeed, as known, each flexographic plate, intended to print a given colour, usually comprises areas in relief, which are those which actually carry out the printing of the colour; the remaining areas of the surface of the plate, on the other hand, do not carry out any printing operation.

The operator can therefore verify whether the surface portions 110 of the cylinder 104 that have dimensional deviations outside of tolerance do or do not overlap the printing areas of the flexographic plate: if they do not overlap, or if they overlap very little, the cylinder 104 can be judged suitable to carry out the print job with that given plate, despite actually having surface portions 110 outside of dimensional tolerance.

It is clear, therefore, that the module 1 according to the invention provides an important aid to the operator in selecting the most suitable cylinder 104, among those available, to carry out a certain printing job. The aforementioned comparing operation can also be carried out using the display 109 of the apparatus 100 according to the invention, for example virtually juxtaposing the image to be printed with a given flexographic plate, in the form of a graphical file, with the module 1 of the cylinder 104 on which it is intended to mount such a plate, so as to verify whether there is or is not overlapping between the printing areas and the boxes 3 having deviations not within the set dimensional tolerance.

In general, the length of the axial and circumferential portions 111 and 112 can be determined in relation, for example, to the specific conditions of one or more printing jobs in which a given plate-holding cylinder 104 is used.

Indeed, it may be necessary to analyse certain areas of the outer surface 105 of the plate-holding cylinder 104 more precisely, for example because they are areas where, most frequently, the printing areas of the flexographic plates that are mounted on each occasion are located, and therefore where the dimensional errors can have a greater influence.

Therefore, it can be decided, in the step of measuring the diameter of the cylinder 104, to define, in such areas, axial and/or circumferential portions 111 and 112 of shorter length, so as to thus obtain surface portions 110 of smaller area.

This makes it possible to obtain more precise information on the dimensional conditions of the cylinder 104 in such areas of the outer surface 105 of the plate-holding cylinder 104, i.e. in a certain number of surface portions 110.

Indeed, in each of such surface portions 110 the average deviation with respect to the nominal diameter of the cylinder 104 is calculated considering a smaller number of measurement points: the value calculated thus takes greater account of possible "peak" areas of the deviation that would, on the other hand, be ignored by calculating the average in a greater number of points.

It has thus been seen how the invention achieves the proposed purposes.

The present invention has been described according to preferred embodiments, but equivalent variants can be devised without departing from the scope of protection offered by the following claims.

## Claims

1. Module for the dimensional analysis of a plate cylinder, **characterised in that** it comprises a plurality of boxes (2,3a,3b), in table form, each of which corresponds to a surface portion (110) of the outer surface (105) of the plate cylinder (104) and indicative of the dimensional divergence of said surface portion (110) with respect to the nominal diameter of the plate cylinder (104).

2. Module according to claim 1, wherein the overall length of the plate cylinder (104) is ideally divided into a plurality of axial portions (111) having respective predetermined lengths, and wherein the circumference of the plate cylinder is ideally divided into a plurality of circumferential portions (112) having respective predetermined angular widths or lengths, each of said boxes (2,3a,3b) being identified by a system of coordinates consisting of said axial and circumferential portions (111, 112).

3. Module according to the previous claim, wherein at least some of said axial and/or circumferential portions (111, 112) have the same angular width and/or length.

4. Module according to one of the previous claims, wherein each of said boxes (2,3a,3b) is indicative of the average dimensional divergence, present in the corresponding surface portion (110), with respect to the nominal diameter of the cylinder (104), calculated based on measurements of the diameter of the cylinder (104) itself carried out at a plurality of points of said surface portion (110).

5. Module according to the previous claim, wherein said average divergence can be indicated, in each of said boxes (2,3a,3b), in numerical form, in chromatic form, in a combination of numerical and chromatic form, or in another form.

6. Module according to the previous claim, wherein said average divergence is identified, for each of said boxes (2,3a,3b), in a different way in relation to whether or not it falls within certain predetermined dimensional tolerances.

7. Module according to one of the previous claims, comprising a paper-type element, or a file of the type able to be read by an electronic processor, or an element able to be directly applied onto the outer surface (105) of the plate cylinder (104), on which said boxes (2,3a,3b) in table form are located.

8. Process for the dimensional analysis of a plate cylinder (104), **characterised in that** it comprises the steps of
dividing the outer surface (105) of the cylinder (104) into a plurality of surface portions (110),
for each of said surface portions (110), detecting the diameter of the cylinder (104) at a plurality of points belonging to said portion,
for each of said surface portions (110), determining the average divergence of the diameter of the cylinder (104) at said points with respect to the nominal diameter of the cylinder (104),
generating a module (1) comprising a plurality of boxes (2,3a,3b) corresponding to said surface portions (110), each indicative of said average divergence.

9. Process according to claim 8, wherein said step of detecting the diameter of the cylinder (104) at a plurality of points is carried out through sensor means (107) comprising a laser emitter and a receiver of reflected signals, or similar.

10. Apparatus (100) for the dimensional analysis of a plate cylinder (104), comprising rotary support means (103) for a plate cylinder (104), a group (106) for detecting the geometric parameters of the plate cylinder (104) comprising sensor means (107), and an electronic processor (108) provided with at least one respective memory element for storing the geometric parameters detected by said sensor means (107), **characterised in that** it comprises means (109a) for generating a module (1) according to one of claims 1 to 7.

11. Apparatus according to claim 10, comprising at least one display (109) suitable for displaying said module (1) produced by said generation means (109a).

12. Apparatus according to claim 11, wherein said display (109) comprises means (109b) for selecting a certain box (2,3a,3b) by the user, suitable for displaying information on the dimensional conditions of the portion (110) corresponding to such a box (2,3a,3b).

13. Apparatus according to claim 12, wherein said selection means (109b) comprise a touch screen display on which the user can press at a certain box (2, 3a, 3b) of interest.

14. Apparatus according to claim 12 or 13, wherein said display (109) is suitable for displaying at least one window (113) giving information on the dimensional conditions of the surface portion (110) of the cylinder (104) corresponding to the box (2,3a,3b) selected by the user through said selection means (109b).
